# EUROPÄISCHE PATENTANMELDUNG

(11) **EP 1 348 840 A1**
(43) Veröffentlichungstag der Anmeldung: **01.10.2003**
(21) Anmeldenummer: 02007194.0
(22) Anmeldetag: 28.03.2002
(51) Int. Cl.: F01N 3/20, B01D 53/86

(54) **Abgasreinigungsanlage**

(71) Anmelder: SIEMENS AKTIENGESELLSCHAFT, 80333 München (DE)
(72) Erfinder: Morawa, Jürgen, 97273 Kürnach (DE); Ritter, Hartmut, 96317 Kronach (DE); Scherbel, Harald, 96342 Stockheim (DE); Schnapp, Steffen, 96257 Marktgraitz (DE)
(74) Vertreter: Tergau & Pohl Patentanwälte

(57) **Zusammenfassung**

Eine Abgasreinigungsanlage für die katalytische Beseitigung eines Schadstoffs (NOₓ) aus dem Abgas (A) einer Verbrennungsanlage, wie eines mit fossilem Brennstoff betriebenen Kraftwerks oder eines Verbrennungsmotors, weist einen Abgaskanal (8) zur Leitung des Abgases (A), eine Eindüseinrichtung (16), die zur Einbringung eines Reaktionsmittels (R) in das Abgas (A) vorgesehen ist, sowie einen in den Abgaskanal (8) eingebauten Katalysator (12) auf. Die genannten Komponenten der Abgasreinigungsanlage sind zu einer geschlossenen Kompaktbaugruppe (2) zusammengefasst, die vorzugsweise als transportabler Container ausgebildet ist.

## Beschreibung

Die Erfindung bezieht sich auf eine Abgasreinigungsanlage für die katalytische Beseitigung eines Schadstoffes aus dem Abgas einer Verbrennungsanlage, wie eines mit fossilem Brennstoff betriebenen Kraftwerks oder eines Verbrennungsmotors, mit einem Abgaskanal zur Leitung des Abgases, mit einer Eindüseinrichtung, die zur Einbringung eines Reaktionsmittels in das Abgas vorgesehen ist, und mit einem in dem Abgaskanal eingebauten Katalysator. Eine derartige Abgasreinigungsanlage ist beispielsweise aus der WO 00/09869 bekannt.

Eine Abgasreinigungsanlage eines stationären Verbrennungsmotors, beispielsweise eines Kraftwerks, wird häufig individuell geplant. Die Aufstellung der zur Abgasreinigung benötigten Komponenten, wie beispielsweise Denox-Katalysator, Reaktionsmittelbehälter (z.B. für Ammoniak- oder Harnstofflösung), Drucklufterzeugung und -aufbereitung für die Eindüsung des Reaktionsmittels, sowie Anlagensteuereinrichtungen erfolgt dabei in Abhängigkeit von den jeweiligen Platzverhältnissen. Die Planung und der Bau einer Abgasreinigungsanlage für eine stationäre Verbrennungsanlage sind daher häufig sehr zeit- und kostenaufwändig.

Der Erfindung liegt die Aufgabe zugrunde, eine besonders zeit- und kostengünstig zu errichtende Abgasreinigungsanlage für eine Verbrennungsanlage wie ein mit fossilem Brennstoff betriebenes Kraftwerk oder ein Verbrennungsmotor anzugeben.

Diese Aufgabe wird erfindungsgemäß gelöst durch eine Abgasreinigungsanlage mit den Merkmalen des Anspruches 1. Hierbei sind in einer geschlossenen Kompaktbaugruppe ein Katalysator zur Abgasreinigung sowie eine Eindüseinrichtung, die zur Einbringung eines Reaktionsmittels in einen Abgasstrom vorgesehen ist, angeordnet. Die geschlossene Kompaktbaugruppe weist jeweils einen Anschluss zum rohgasseitigen sowie zum reingasseitigen Anschluss an den Abgasstrom auf. Durch die Integration der einzelnen Komponenten der Abgasreinigungsanlage in der geschlossenen Kompaktbaugruppe kann diese sehr einfach an eine Verbrennungsanlage, beispielsweise einen Dieselmotor, angeschlossen werden. Die Abgasreinigungsanlage ist auf einfache Weise mit verschiedenen Verbrennungsanlagen kombinierbar.

Nach vorteilhaften Ausgestaltungen umfasst die Abgasreinigungsanlage innerhalb der geschlossenen Kompaktbaugruppe weitere Komponenten. Im Einzelnen sind dies alternativ oder in Kombination Einrichtungen zur Druckluftversorgung, ein Reaktionsmitteltank, eine Dosiereinrichtung für das Reaktionsmittel, sowie eine Steuereinheit, bevorzugt mit Abgas-Analytik, für die Abgasreinigungsanlage.

Aufgrund der Zusammenfassung der genannten Einzelkomponenten zu einer insbesondere voll funktionsfähigen Gesamteinheit innerhalb der geschlossenen Kompaktbaugruppe ist die Abgasreinigungsanlage sehr raumsparend aufgebaut. Die Inbetriebnahme der Abgasreinigungsanlage ist mit geringem Zeit- und Arbeitsaufwand durchführbar. Die Abgasreinigungsanlage ist weitgehend autark betreibbar. Insbesondere sind externe Anschlussleitungen für eine permanente Versorgung mit Betriebs- und Hilfsstoffen wie ein Reaktionsmittel zur Abgasreinigung und Druckluft nicht erforderlich.

Verbindungsleitungen zwischen einzelnen Komponenten der Abgasreinigungsanlage sind kurz, wodurch insbesondere kurze Reaktionszeiten gewährleistet sind und andernfalls nicht auszuschließende Totzeiten, beispielsweise bei der Umschaltung zwischen verschiedenen Betriebszuständen, praktisch vollständig vermieden werden. Aufgrund der damit gegebenen guten Steuerbarkeit der Abgasreinigungsanlage ist in allen Betriebszuständen, insbesondere auch beim Anfahren der Anlage, eine hohe Effektivität der Abgasreinigung gegeben.

Die geschlossene Kompaktbaugruppe ist vorteilhafterweise als im Freien aufstellbarer Container ausgeführt. Bevorzugt ist der Container zum Transport, insbesondere auf einem Lastkraftwagen, geeignet.

Ein Ausführungsbeispiel der Erfindung wird nachfolgend anhand einer Zeichnung näher erläutert. Hierin zeigen:
- FIG 1: eine Abgasreinigungsanlage in einer geschlossenen Kompaktbaugruppe im Längsschnitt,
- FIG 2: die Abgasreinigungsanlage nach FIG 1 im Querschnitt, und
- FIG 3: einen Aufstellplan der Abgasreinigungsanlage nach FIG 1.

Einander entsprechende Teile sind in allen Figuren mit den gleichen Bezugszeichen gekennzeichnet.

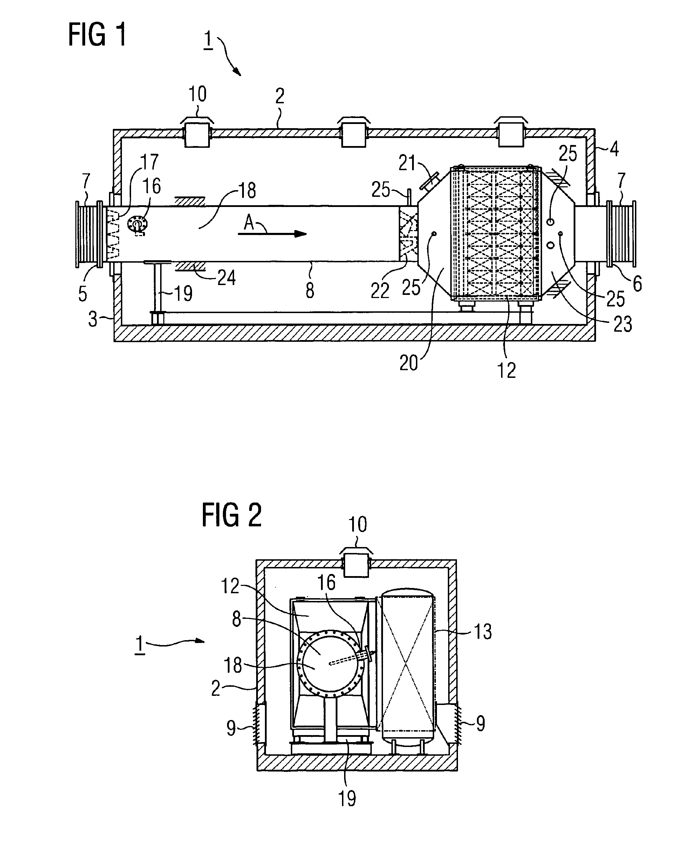

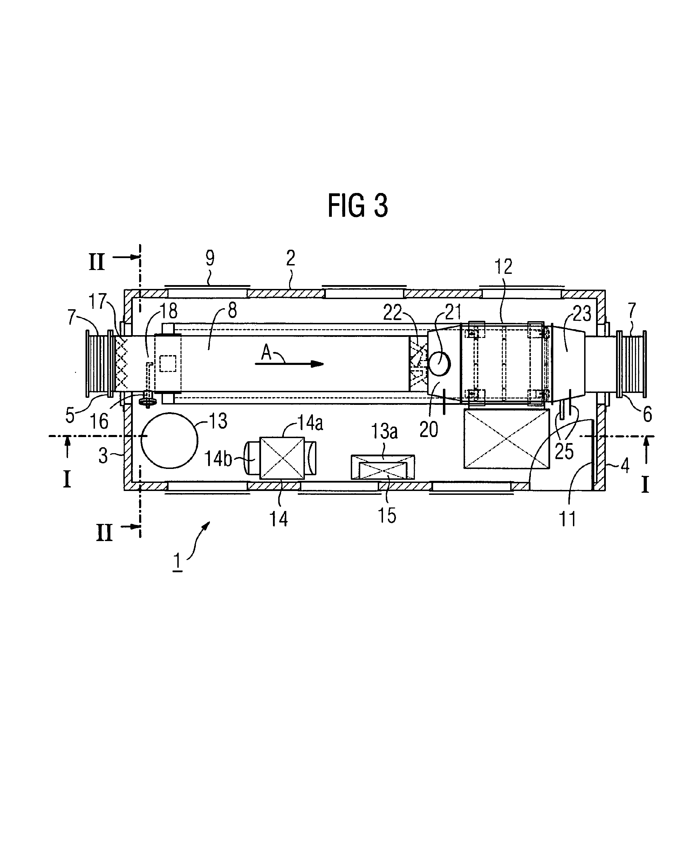

Die FIG 1 bis 3 zeigen eine an eine (nicht dargestellte) Verbrennungsanlage angeschlossene Abgasreinigungsanlage 1 innerhalb einer geschlossenen Kompaktbaugruppe 2, die als ein zum LKW-Transport geeigneter 20-Fuß-Container (Länge ca. 6 m) ausgebildet ist. Innerhalb der geschlossenen Kompaktbaugruppe 2 sind sämtliche zur Abgasreinigung erforderlichen im Nachfolgenden näher erläuterten Komponenten einschließlich der zum Betrieb dieser Komponenten erforderlichen Verbindungsleitungen zwischen diesen Komponenten bereits vor der Inbetriebnahme der Abgasreinigungsanlage 1, d.h. insbesondere vor dem Anschluss der Abgasreinigungsanlage 1 an die Verbrennungsanlage, installiert. Die Abgasreinigungsanlage 1 bildet damit eine voll funktionsfähige, als Ganzes transportable Baueinheit.

Die geschlossene Kompaktbaugruppe 2 weist an deren Stirnseiten 3,4 einen rohgasseitigen Anschluss 5 bzw. einen reingasseitigen Anschluss 6 auf. An beiden Abgasanschlüssen 5,6 befinden sich Kompensatoren 7 zum Anschluss an nicht dargestellte Abgasleitungen. Innerhalb der geschlossenen Kompaktbaugruppe 2 verläuft ein Abgaskanal 8 für ein Abgas A parallel zur Containerlängsachse. Die geschlossene Kompaktbaugruppe 2 ist mit einer Lüftungsanlage ausgerüstet, die Lufteinlässe 9 und Luftauslässe 10 umfasst. Sowohl die Lufteinlässe 9 als auch die Luftauslässe 10 können mit.nicht näher dargestellten Schalldämmelementen ausgerüstet sein. Die Begehbarkeit der geschlossenen Kompaktbaugruppe 2, die für eine Aufstellung im Freien geeignet ist, ist durch eine Tür 11 gegeben.

Die geschlossene Kompaktbaugruppe 2 umfasst weiterhin einen Katalysator 12, einen Reaktionsmitteltank 13, eine autarke Druckluftversorgungsstation 14, die einen Kompressor 14a sowie einen Drucklufttank oder Druckluftspeicher 14b umfasst, sowie eine Steuereinheit oder Steuereinrichtung 15. Aus dem Reaktionsmitteltank 13 wird ein Reaktionsmittel R, beispielsweise Harnstofflösung oder Ammoniaklösung oder Ammoniak, über eine Dosiereinrichtung oder Dosiereinheit 13a einer Eindüseinrichtung 16 zugeführt. Die Eindüseinrichtung 16 ist in der Nähe des rohgasseitigen Anschlusses 5 angeordnet. Um eine gute Verwirbelung des Abgases A bereits vor der Eindüsung des Reaktionsmittels R in den Abgaskanal 8 zu gewährleisten ist am rohgasseitigen Anschluss 5 ein Mischer 17 in Form eines statischen Abgasmischers installiert. Nach Durchtritt durch den Mischer 17 wird das Reaktionsmittel R in einen Eindüsraum 18 innerhalb des Abgaskanals 8 injiziert. Die Injektion des Reaktionsmittels R erfolgt mit Hilfe des in der Druckluftversorgungsstation 14 erzeugten Druckgases, insbesondere Druckluft. Im Eindüsraum 18 sowie im nachfolgenden eine Mischstrecke bildenden Abschnitt des Abgaskanals 8 vergleichmäßigt sich die Verteilung des Reaktionsmittels R innerhalb des Abgases A.

An den Abgaskanal 8 innerhalb der geschlossenen Kompaktbaugruppe 2 schließt sich der Katalysator 12 an, wobei sowohl der Abgaskanal 8 mit Eindüseinrichtung 16 und Eindüsraum 18 als auch der Katalysator 12 auf einer Stützkonstruktion 19 gelagert sind, die derart gestaltet ist, dass thermisch bedingte Längenänderungen ausgeglichen werden können. Im Katalysator 12, der nach dem SCR (selektive katalytische Reduktion)-Verfahren arbeitet, werden Stickoxide (NOₓ) als im Abgas A enthaltene Schadstoffe zu Stickstoff reduziert, wobei gleichzeitig Wasserdampf gebildet wird. Der Katalysator 12 weist einen wesentlich größeren Querschnitt als der Abgaskanal 8 auf und ist mittels eines Übergangsstücks 20 an diesen angeschlossen. Im Übergangsstück 20 ist eine Inspektions-öffnung 21 vorgesehen. Um trotz des innerhalb einer kurzen Strömungsstrecke stark aufgeweiteten Strömungsquerschnitts den Katalysator 12 gleichmäßig mit Abgas A zu beaufschlagen, ist zwischen dem Abgaskanal 8 und dem Übergangsstück 20 ein weiterer Mischer 22 vorgesehen. Reingasseitig an den Katalysator 12 anschließend reduziert ein weiteres Übergangsstück 23 den Abgasstrom auf den ursprünglichen Strömungsquerschnitt des Abgaskanals 8. Der Abgaskanal 8 sowie die Übergangsstücke 20,23 und der Katalysator 12 sind von einer schraffiert angedeuteten Isolierung 24 umgeben.

Die Übergangsstücke 20,23 weisen Messöffnungen 25 beispielsweise für Druck und Temperatur oder für die automatische Entnahme von Abgas A auf. An diesen Messöffnungen 25 angeschlossene, nicht dargestellte Messleitungen sind mit der Steuereinheit 15 verbunden, die die gesamte Abgasreinigungsanlage 1 steuert. Die Steuereinheit 15 umfasst auch die Analyse des Abgases A sowie die Aufzeichnung der ermittelten Analysewerte. Aufgrund der kompakten Bauweise der Abgasreinigungsanlage 1 sind die Messleitungen ebenso wie weitere Leitungen, beispielsweise Druckluftleitungen zwischen der Druckluftversorgungseinrichtung 14 und der Eindüseinrichtung 16 besonders kurz ausgeführt. Die Abgasreinigungsanlage 1 zeichnet sich daher durch ein Regelverhalten mit besonders kurzen Reaktionszeiten aus. Damit ist insbesondere die Eindüsung von Reaktionsmittel R in den Abgaskanal 8 schnell auf eine sich ändernde Zusammensetzung des Abgases A einstellbar. Die Steuereinheit 15 ist ferner mit der Steuerung der Verbrennungsanlage, beispielsweise eines Dieselmotors, verknüpft.

## Patentansprüche

1. Abgasreinigungsanlage für die katalytische Beseitigung eines Schadstoffs (NOₓ) aus dem Abgas (A) einer Verbrennungsanlage, wie eines mit fossilem Brennstoff betriebenen Kraftwerks oder eines Verbrennungsmotors, mit einem Abgaskanal (8) zur Leitung des Abgases (A), mit einer Eindüseinrichtung (16), die zur Einbringung eines Reaktionsmittels (R) in das Abgas (A) vorgesehen ist, und mit einem in den Abgaskanal (8) eingebauten Katalysator (12),
**dadurch gekennzeichnet, dass** innerhalb einer geschlossenen Kompaktbaugruppe (2) die Eindüseinrichtung (16) sowie der Katalysator (12) angeordnet sind und die geschlossene Kompaktbaugruppe (2) einen eingangsseitigen Rohgasanschluss (5) sowie einen ausgangsseitigen Reingasanschluss (6) aufweist.

2. Abgasreinigungsanlage nach Anspruch 1, **gekennzeichnet durch** eine Druckluftversorgungsstation (14) innerhalb der geschlossenen Kompaktbaugruppe (2).

3. Abgasreinigungsanlage nach Anspruch 1 oder 2, **gekennzeichnet durch** einen Reaktionsmitteltank (13) für das Reaktionsmittel (R) innerhalb der geschlossenen Kompaktbaugruppe (2).

4. Abgasreinigungsanlage nach einem der Ansprüche 1 bis 3, **gekennzeichnet durch** eine Dosiereinrichtung (13a) für das Reaktionsmittel (R) innerhalb der geschlossenen Kompaktbaugruppe (2).

5. Abgasreinigungsanlage nach einem der Ansprüche 1 bis 4, **gekennzeichnet durch** eine Steuereinheit (15) innerhalb der geschlossenen Kompaktbaugruppe (2).

6. Abgasreinigungsanlage nach Anspruch 5, **dadurch gekennzeichnet, dass** die Steuereinheit (15) eine Abgas-Analytik umfasst.

7. Abgasreinigungsanlage nach einem der Ansprüche 1 bis 6, **dadurch gekennzeichnet, dass** die geschlossene Kompaktbaugruppe (2) als transportabler Container ausgebildet ist.
